(19) Europäisches Patentamt
European Patent Office
Office européen des brevets

(11) **EP 4 660 612 A1**

(12) **EUROPEAN PATENT APPLICATION**

(43) Date of publication:
**10.12.2025 Bulletin 2025/50**

(21) Application number: **25180914.1**

(22) Date of filing: **04.06.2025**

(51) International Patent Classification (IPC):
*G01N 21/552* (2014.01)　　*G01N 21/77* (2006.01)

(52) Cooperative Patent Classification (CPC):
**G01N 21/554; G01N 21/7703;** G01N 21/7743

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.06.2024 GR 20240100413**

(71) Applicant: **University of Patras**
**26504 Rio Achaia (GR)**

(72) Inventors:
• **VAINOS, Nikolaos**
**26441 Patras (GR)**
• **PAPAIOANNOU, Dionisios**
**26221 Patras (GR)**
• **PAPACHRISTOPOULOU, Konstantina**
**26504 Patras (GR)**
• **STATHOPOULOS, Konstantinos**
**26331 Patras (GR)**
• **KALIATSI, Eleni**
**26504 Patras (GR)**
• **MPAGIOKIS, Eleftherios**
**26504 Patras (GR)**
• **MINANAKI, Eleni**
**12244 Aigaleo (GR)**

(74) Representative: **Dodou, Evdokia**
**Katsimpiri 3**
**15561 Cholargos, Athens (GR)**

(54) **PLASMONIC RADIATION BIOSENSOR**

(57) Method for the detection with high accuracy, sensitivity and selectivity of chemical and biological agents, wherein an exogenous chemical and/or biological agent is trapped in a plasmonic nanostructure and changes its physical and/or chemical environment, so that upon optical interrogation with radiation of distinct wavelengths and polarization properties, the nanostructure is forced to emit optical radiation from non-radiative plasmon resonance modes, thereby altering the properties of the transmitted, reflected and diffracted radiation. The differential variation of any property of the light constitutes the measurable signal for the quantification of the chemical/biological agent to be detected. Also provided is a plasmonic radiation biosensor device for implementing the method, incorporating a free-form free-space or optical waveguide sensor head equipped with designed three-dimensional plasmonic diffractive nanostructures of large surface area and free stereometric form, or multiple nanostructures, incorporating molecular or atomic functionalizers capable of trapping and detecting the chemical/biological agent through the propagation and/or reflection and/or diffraction of optical radiation.

**FIG. 4**

EP 4 660 612 A1

## Description

### TECHNICAL FIELD

The present invention relates to methods and biosensors for the detection of chemical and biological agents and in particular methods and biosensors based on the detection of monochromatic light emitted upon plasmon resonance in three-dimensional plasmonic nanostructures.

### BACKGROUND OF THE INVENTION

The interaction of optical radiation with nanoparticles of mainly noble metals results in the coupled vibration of the electron plasma that defines the physical concept of "plasmon". The Localized Surface Plasmon Resonance (LSPR) is achieved in a specific spectral region and results in absorption of radiation. For example, in an ensemble of gold nanoparticles distributed in a medium, every nanoparticle constitutes an entity that contributes to the collective response resulting in the appearance of an absorption spectrum. The metallic ensemble acquires therefore a dielectric type chromatic behavior. The coloration of the medium which is observed in liquid solutions, glasses or other solids is known since antiquity. The resonance condition is defined by (a) the properties of the conducting material (complex permittivity) (b) the dimensions of the nanoparticle and (c) the properties of the surrounding medium. The interaction of light, usually in the visible and near infrared spectrum, and the spectroscopic analysis of the absorption of the plasmonic resonance constitutes a well-established method capable of detecting physical, chemical and biological factors in the neighboring environment of the nanoparticles, and has led to great innovations of early medical diagnosis, with methods of direct and rapid detection of biological factors [e.g. see review article by Amendola et al, J. Phys.: Condens. Matter 29 (2017) 203002]. To date, a variety of detection methods have been developed and deployed, based on the spectral alteration, such as a simple visual observation of color change of the medium (e.g. pregnancy test, Covid test, etc.), or by use of fluorescent molecular labels and fluorescence spectroscopy, or direct detection of absorption spectra, or via Raman spectroscopy or other methods.

Established detection methods based on surface plasmon resonance (SPR) in thin metallic films make use of total internal reflection arrangements by use of orthogonal prisms [Otto, Zeitschrift fuer Physik 216, 398-410 (1968); Kretschmann, Z. Naturforsch. 23 a, 2135-2136 (1968)], or coupling using optical diffraction grating. The coupling of radiation with the metallic film and the excitation of the plasmon results in absorption of light as a function of the surrounding medium, which absorption is the measurable quantity [Liedberg et al, Sensors and Actuators, 4, 299 (1983)]. Arrangements of light-plasmon coupling are used for the detection, such as the Kretschmann total reflection or coupling via diffraction grating. Imaging methods (SPR Imaging/SRI) are also applied. Detection is achieved by (a) measurement of the decrease of light intensity ($I[W/cm^2]$) of the totally reflected light due to absorption, for example in Kretschmann configuration, (b) measurement of the angular change of the angle of incidence of light $\Delta\theta(deg)$, which determines the component of the light wavevector capable to excite the plasmon, and (c) variation (shift) of the central wavelength of the spectral absorption curve $\Delta\lambda$ (nm).

The commercially available biological antigen-antibody and related sensor technology is based either on optical techniques using nanoparticles (e.g. see chromatic tests and related systems, e.g. US Patent 11467154 B2). One device category makes use of paper and the like porous materials impregnated with functionalized gold nanoparticles, so as to achieve antigen-antibody colorimetric and fluorescence reactions. The detection kits allow point-of-care (POC) diagnosis in a ON-OFF manner, without offering high sensitivity and quantification of detection. Another category concerns high capital cost diagnostic laboratory instruments based on the aforementioned spectroscopic techniques, by coupling light via total reflection prisms combined with spectroscopic analysis. Examples of such instruments are the Biacore T200 and related analyzers of other firms (e.g. Reichert, Bruker, Sartorius, BioNavis, etc.), while a plethora of publications and patents [US Patent Application 20190250100 A1] concern detection of absorption by spectroscopy, ellipsometry, ELISA methodology, imaging techniques of plasmon resonance absorption (SPR Imaging) [Singh and Hillier, Anal. Chem. 78, 2009 (2006)]. The localized enhancement of electric field of light in metallic nanostructures results in enhanced absorption due to surface plasmon resonance (SPR), the enhanced Raman scattering (Surface Enhanced Raman Scattering (SERS) [US Patent 11237112 B2; Li et al, ACS Sensors 5, 1419(2020)], the enhanced fluorescence due to plasmon resonance (SPR-Fluorescence) in nanopillar structures [US Patent Application 20060011862 A1], as well as various variations of the said methods, which define the current-state-of-the-art.

The main detection method relates to the selective trapping of chemical and biological agents in RNA and DNA aptamers which alter the environment of the plasmonic sensor [e.g. Wang & Zhou, Anal. Chem., 80, 7174 (2008)], or with biosystems functionalized with aptamers [Ding et al, Bioorg. & Med Chem Lett. 27, 4256 (2017)], or antigen-antibody reactions. For amplifying the detectivity, multiple anchoring of DNA molecules is performed, or fabrication of sandwich structures [Chang, Biosensors 11, 233 (2021)] and the like devices and methods are employed. The detection technique via plasmonic resonance is rapidly advancing with the development of lab-on-chip devices which embody microfluidic systems and integrated devices (e.g. US Patent Application 20160122794 A1). Furthermore, biosensor microarray systems [Sun, J Lab Autom, 20, 334(2015)] are gaining ground because they are fabricated by inkjet printing methods at low cost on various substrates. Various integrated photonic devices have been reported, aiming for the versatile detection of substances. Examples are photonic interferometric waveguide devices [e.g. US Patent Application 20200386681 A1], microring resonators [Boyd, Heebner, Appl Opt 40, 5742 (2001)], or Bragg grating optical fibre sensors [e.g. Coelho et al, J. Biomed Opt 21, 087005 (2016)]. Devices of this kind also target applications for the detection of undesirable chemical and biological agents in foods, which constitutes a current and continuously increasing necessity [Melinte et al, Trends Anal Chem 154, 116679(2022); Dai et al, Comp Rev Food Sci Food Saf. 1-21(2022)]. The aforementioned devices operate on the basis of light absorption phenomena under plasmon resonance conditions and make use mainly of Kretschmann coupling prisms, or optical waveguide and optical fibre devices. Contrary to the advanced technology and automation, the available systems require complex laboratory methodologies and do not provide high sensitivity for the detection of small toxic hazardous molecules at extremely low concentration (ppb/ppt/ppq). As a result, the use of chromatography and mass-spectrometry instrumentation becomes necessary, which are also main-frame analytical high capital cost infrastructures, requiring complex procedures of sampling and analysis.

The transformation of the optical field via plasmonic effects in designed and lithographically fabricated nanostructures has attracted significant research interest especially for sensor applications (see. e.g. Shalaev & Kawata, Nanophotonics with surface plasmons, Elsevier 2007]. Detection of enhanced light emission in photonic nanostructures fabricated by lithographic techniques (electron-beam lithography/EBL and focused ion beam lithography/FIB) is observed, which has been characterized as "extraordinary optical transmission" [Ebbesen et al, Nature 39, 668(1998)]. The relevant US Patent Application 20130065777 concerns a biosensor which employs the "extraordinary optical transmission" of a nanohole array. The spectroscopic observation of enhanced transmission in a diffraction grating patterned from an optical disc [Singh and Hillier, Anal. Chem. 80, 3803(2008)] enhances the interest in sensor applications.

Some of the most important problems and drawbacks of the available methods are the following:

- For the function of plasmon resonance absorption, the chemical/biological agent is detected via absorption spectroscopy or ellipsometry which requires complex methodology and high-cost instrumentation,

- The inability of detecting hazardous substances and biomolecules and other agents at very low concentrations, such as ppb/ppt/ppq or even lower, necessitates time-consuming procedures of sampling, chromatography, or finally the referral to mass-spectrometry techniques and mainframe laboratory infrastructures,

- The reduced detectivity of label-free spectral absorption necessitates the amplification of detection by complex chemical functionalization processes, for example via multiple anchoring of aptamers, etc.,

- The technology of integrated devices in the form of lab-on-chip is based on plasmonic absorption in small spatial extend interaction regions, limited within the branches of an optical waveguide Mach-Zehnder interferometer, or the surface area of an optical microring resonator, or the surface of an optical fibre, results in limitation of the detectivity, or the sensitivity and the selectivity of the sensor,

- The nanohole biosensor of "extraordinary optical transmission" requires very high cost fabrication methods of electron-beam or ion-beam lithography, also comprising small interaction surface area, which limits the response and sensitivity characteristics of the sensor.

Therefore, a need still remains for simple, compact and low-cost plasmonic biosensors, for the detection of chemical and biological agents with high accuracy and sensitivity.

SUMMARY OF THE INVENTION

The present invention mitigates the aforementioned drawbacks, by providing a method for the detection of chemical and biological agents according to claim 1. Specifically, said method comprises the following steps: (a) an exogenous chemical or/and biological agent is trapped in a plasmonic nanostructure and alters its physical or/and chemical environment; (b) upon optical interrogation with light, the nanostructure is forced to plasmonic resonance and emits radiation by its non-radiative plasmon resonance modes, wherein the emitted radiation alters the properties of the transmitted, reflected, retro-reflected, and/or scattered (diffracted) light, and (c) the altered properties of the light produced under on-resonance conditions are compared with the respective properties of the radiation produced under off-resonance conditions and the difference produced constitutes the signal for the detection and quantitative measurement of the exogenous agent (113).

The present disclosure also provides plasmon radiation biosensor devices using an extended free-form 3-D surface interaction region comprising plasmonic nanostructure(s) characterized by a simple multifunctional form, small fabrication cost, and facile adaptability to a variety of applications. Contrary to the established plasmon resonance spectral absorption, enhanced fluorescence, enhanced Raman scattering, and the like methods, the invention exploits the radiation emitted by non-radiative plasmon resonance modes by provision of suitable conditions. Sensing operations are based on variation of the properties of radiation observed 'on-resonance' and 'off-resonance'. The differential of this variation constitutes the signal and measurable quantity of the chemical or biological agent.

Other aspects and benefits of the present invention will become apparent from the detailed description to follow.

BRIEF DESCRIPTION OF THE DRAWINGS

The present invention will now be described with reference to certain embodiments thereof which are illustrated in the accompanying drawings. It should be noted that the accompanying drawings illustrate preferred embodiments of the invention, therefore should not be considered as limiting the scope of the invention.

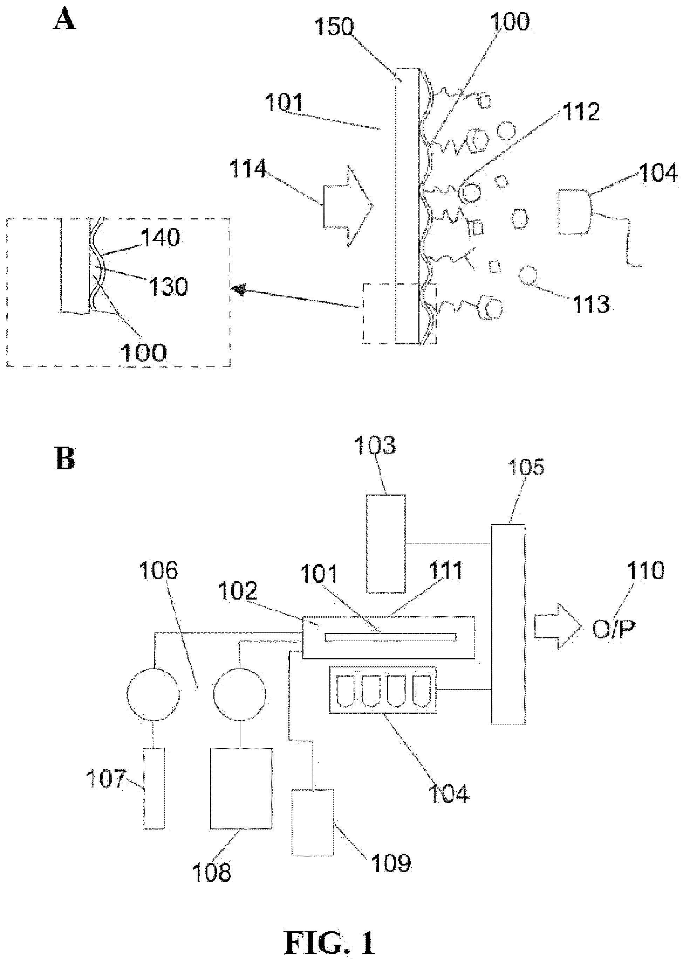

Figure 1 presents (A) a detailed illustration of the periodically modulated surface relief of the plasmonic nanostructure. The insert on the left depicts the plasmonic nanostructure in more detail; and (B) a typical structure of an embodiment of the integrated sensor device.

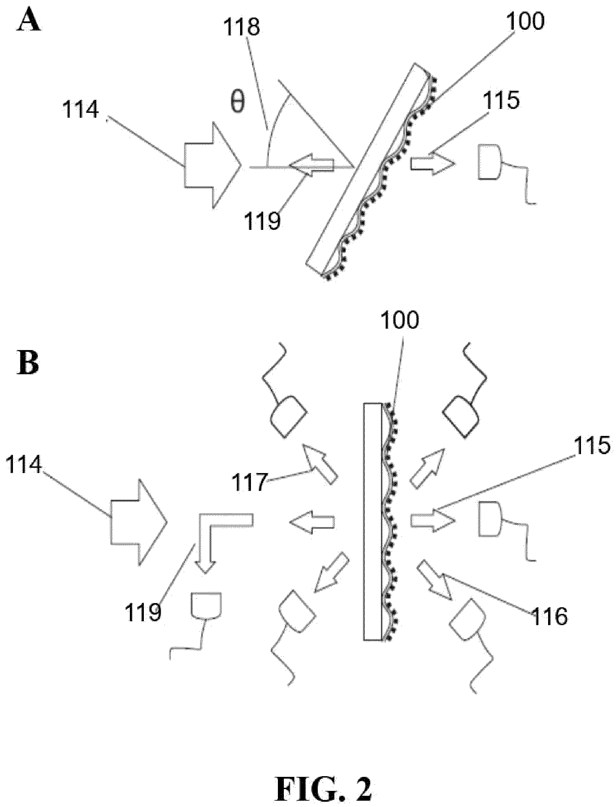

Figure 2 (A) and (B) show a typical form of a sensorial surface having periodically modulated surface relief and presents indicative methods of optical interrogation.

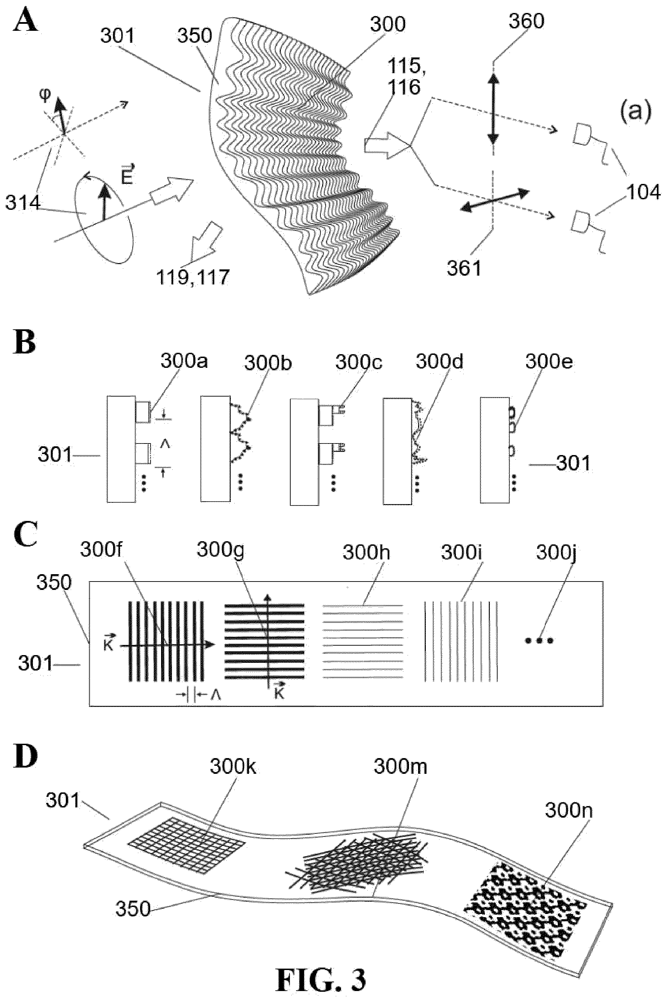

Figure 3 is a schematic presentation of (A) a representative surface relief plasmonic nanostructure formed on free-form sensor surface and paradigmatic free space optical interrogation modes; (B) paradigmatic forms of designed plasmonic nanostructures; (C) twin-type diffractive and holographic plasmonic nanostructures; and (D) examples of various types of multiplexed designs embodied in the same free-form sensor surface.

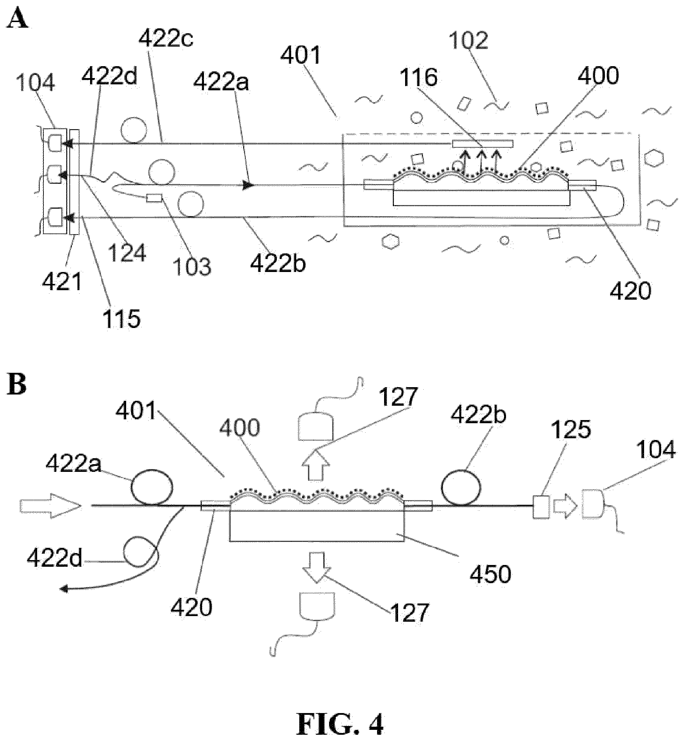

Figure 4 is a schematic presentation of (A) details of representative integrated optical waveguide plasmonic nanostructured sensor head; and (B) a representative waveguide sensor device with plasmonic nanostructures interconnected to optical fibres to facilitate optical interrogation.

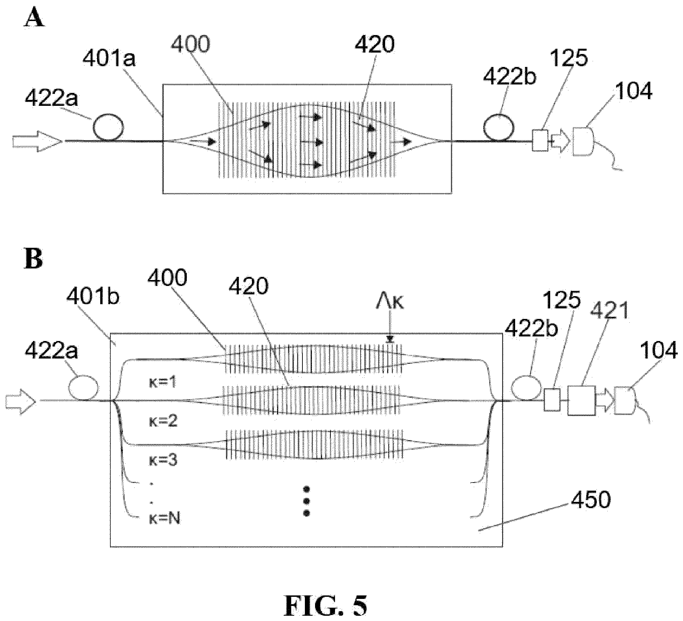

Figure 5 depicts (A) a typical form of large area surface-modulated optical waveguide sensor with radiation guiding and fibre connections; and (B) a structure of multiple optical waveguide sensors with plasmonic structures interconnected to optical fibres to facilitate simultaneous sensing of many chemical or biological agents.

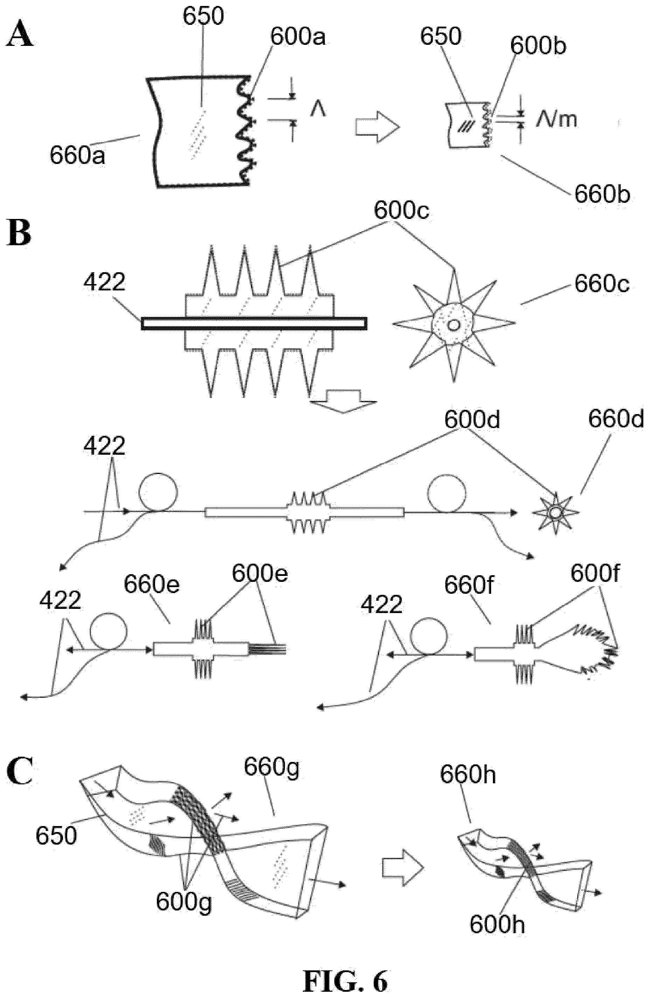

Figure 6 presents (A) an exemplary form of free-space sensors based on ultraporous aerogel having free-form design, with its conformal solid clone which is fabricated by the method of systolic nanotechnology; (B) exemplary form of an aerogel sensor incorporated in an optical fibre comprising nanotip surface relief structures and variety of produced solid clones exhibiting different functionalities, interconnected in an optical fibre network; and (C) a free-form aerogel sensor which embodies plasmonic nanostructures and its dense solid clone comprising downsized plasmonic nanostructures.

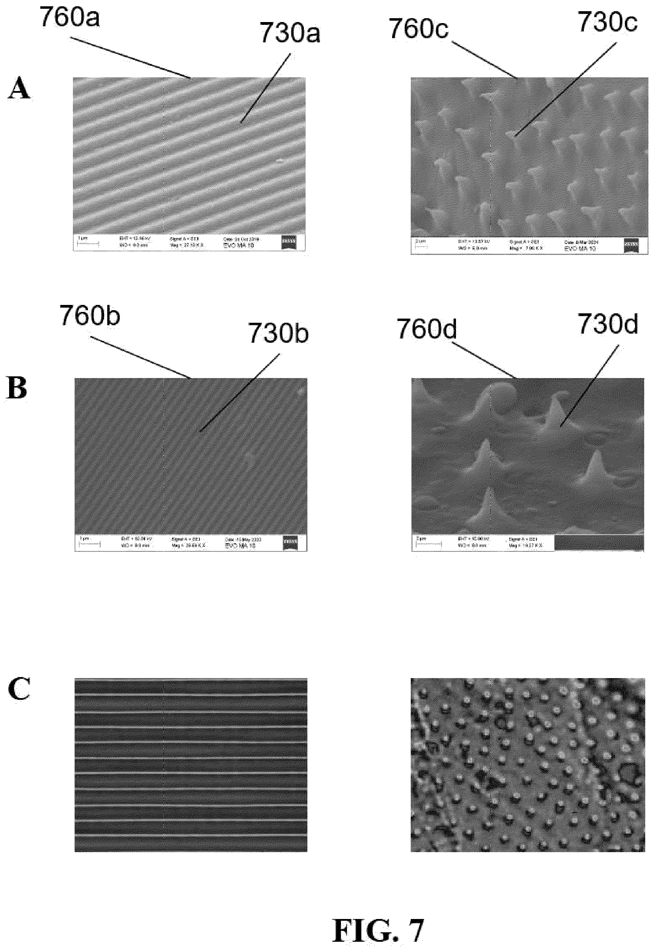

Figure 7 shows examples of real plasmonic nanostructures where (A) presents the scanning electron microscopy images of a periodic nanostructure embodied in silica aerogel monolithic substrate and its dense silica clone with the optical microscope image illustrating the near field light intensity employed in the sensing operation of the clone; (B) presents a bioarchitectonic structure fabricated by use of a scarabaei wing structure embodied in silica aerogel monolithic substrate and its dense silica clone with the optical microscope image illustrating the near field light intensity employed in the sensing operation of the clone.

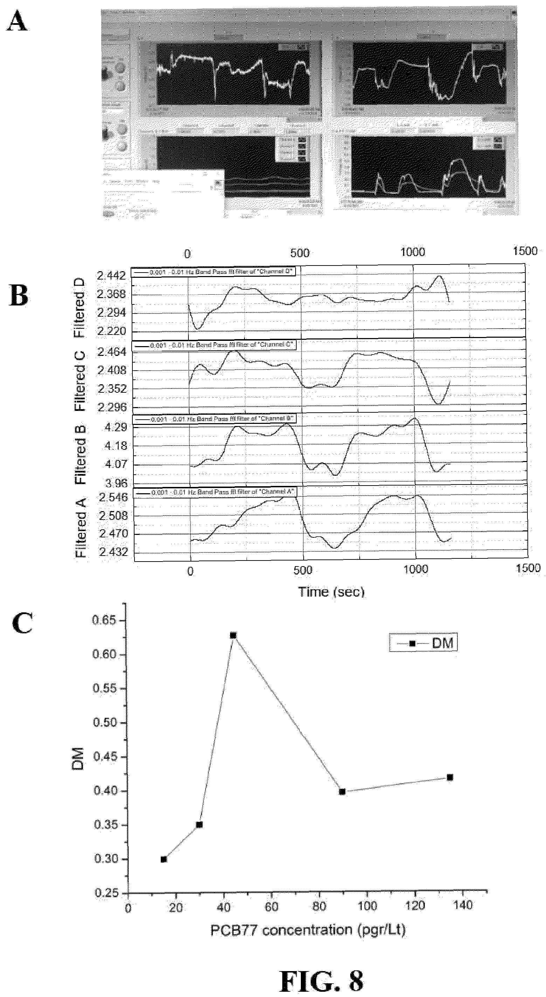

Figure 8 presents part of experimental data of the plasmonic radiation biosensor detecting the toxin PCB77 at very low concentrations, of the order of parts-per-quadrillion.

DETAILED DESCRIPTION OF THE INVENTION

The present invention provides a method for detecting chemical and biological agents characterized by the fact that an exogenous chemical or biological agent is trapped in a plasmonic nanostructure and alters its physical and chemical environment. As shown in Figure 1A, when the nanostructure (100) is forced to plasmonic resonance upon optical interrogation with light (114), the nanostructure emits radiation from its non-radiative plasmon resonance modes, and the emitted radiation alters the properties of the transmitted, reflected, retro-reflected, and/or scattered (diffracted) light. The altered properties of the radiation produced under on-resonance conditions are compared with the respective properties of the radiation produced under off-resonance conditions. The differential measurement of the properties of the on-resonance and the off-resonance radiation constitutes the signal for the detection and the quantitative measurement of the exogenous chemical or biological agent.

For the implementation of this method, elements such as biomolecules or molecules or atoms which are called "functionalizers" (112) are anchored on the surface of the plasmonic nanostructure (100). These molecules or biomolecules or atoms have the capacity to trap selectively small molecules of toxic substances (as for example dioxins) or other biochemical substances (as for example thrombin, adenosine and the like agents) or to interact as antibodies-antigens or similar actions. The selective trapping of the said exogenous toxic agents or chemical or biological factors (113) results in the alteration of the local environment, for example, via the spatial macromolecular conformation of the functionalizers (112), which alteration affects the plasmon resonance conditions of the nanostructure (100).

According to the invention, the signal detected is the differential variation of the difference of the properties of the radiation detected between the on-resonance and off-resonance conditions of the plasmonic nanostructure (100), where the radiation can be transmitted or reflected or scattered/diffracted off upon exposure of the plasmonic nanostructure (100) to the chemical and/or biological agent (113).

In contrast to the well-established methods based plasmon resonance phenomena, such as plasmon resonance absorption, enhanced Raman scattering and enhanced fluorescence the invention explores the phenomenon of radiation emission by non-radiative plasmon resonance modes in bespoke designed plasmonic nanostructures. This effect has been theoretically predicted [Ferrell, Phys. Rev. 111, 1214 (1958); Stern, Phys. Rev. Letters 8, 7 (1962)] and it was observed upon plasmon excitation by electron beams [Steinmann, Phys. Rev. Lett. 5, 470 (1960)]. Emission of radiation by non-radiative plasmon resonance modes proved upon irradiation of a diffraction grating engraved in silver-coated steel [Teng and Stern, Phys. Rev. Lett 19, 511(1967)], followed by similar observations in the prism arrangement of Kretschmann [Z. Naturforsch. 23 a, 2135-2136 (1968)], due to the surface-roughness of the silver film deposited on the prism surface. The light-plasmon coupling in optical gratings has been also discussed by Raether [Surface Plasmons on Smooth and Rough Surfaces and on Gratings, Springer-Verlag, 1988].

The present invention further provides a plasmonic radiation biosensor which is based on the interaction of light, i.e. optical radiation, which is transmitted, reflected or scattered, i.e. diffracted off especially bespoke designed functionalized plasmonic resonance diffractive nanostructures of three-dimensional (3-D) free stereometric form (free-form). During the optical interrogation, the nanostructure is forced to plasmonic resonance and emits radiation by non-radiative plasmon resonance modes as far as the phase matching conditions are satisfied. By these means, the states of "on-resonance" and "off-resonance" are differentiated, and the emitted radiation alters the properties of the transmitted, reflected, retro-reflected, and/or scattered (diffracted) light. These altered properties are detected as the variation of one or more of the properties of light including the intensity, the phase, or the polarization of light, depending on the operational specifications. This variation is detected upon the interaction with the light during the optical interrogation. Measurable quantity (measurand) is in the simplest case the intensity of light, without excluding the variations of phase and polarization. The measurable signal of detection provides the quantitative measurement of the exogeneous chemical or biological agent.

The interaction of light with the nanostructure is a direct function of the optical properties of the medium surrounding the nanostructure. This medium determines the condition of plasmonic resonance of the nanostructure and it is detected by means of optical interrogation of the sensor, thus achieving fast and high-accuracy detection of toxins in foods (e.g. aflatoxins, dioxins, and other toxic substances), as well as various chemical, biochemical, and biological agents, in a facile and low-cost procedure of direct measurement of the properties of light.

The plasmonic radiation biosensor device of the present invention comprises a plasmonic nanostructure sensor head for the implementation of the method for the detection of chemical and biological agents.

A first exemplary embodiment of the plasmonic radiation biosensor head is presented in Figure 1A. The sensor head (101) comprises a solid substrate (150), i.e. an object made of solid material, having a free-form stereometry that is designed and fabricated with no design constraints. This substrate can be a rigid or a flexible object, maintaining or not maintaining its stereometric form. The sensor head (101) further comprises a bespoke designed nanostructure surface relief (130), in direct contact with the solid substrate (150), the surface relief (130) being a mathematically continuous surface relief, i.e. having no voids or discontinuities. This is preferably a diffractive surface relief nanostructure, capable of producing diffraction of radiation in a predetermined manner. In the illustrative case of Figure 1A, said nanostructure (100) has a simple harmonic profile. The nanostructure (100) is coated by a specially designed conducting or semiconducting thin film (140) having typical thickness of the order of 20nm to 80nm, depending on the material. The surface relief (130) together with the thin film (140) produce a plasmonic nanostructure (100) having the capacity to maintain plasmon resonances upon suitable excitation.

The plasmonic nanostructure (100) has a free 3-D stereometric form, i.e. has no design constraints. The plasmonic nanostructure (100) is preferably made of inorganic and/or organic and/or hybrid and/or ultraporous materials and is coated with conductive or semiconducting films.

In the exemplary embodiment shown in Figure 1A, the free-space sensor head (101) comprises an exemplary nanostructure (100) comprising a periodic harmonic diffractive nanostructure surface relief (130) of spatial period, A, and wavevector, K, having magnitude, $|K|=2\pi/\Lambda$. A thin film (140) of noble metal or other suitable material is deposited on the nanostructure surface, having nanometric thickness (typical thickness dimension 20nm<t<80nm), so that a plasmonic nanostructure (100) is created. The system is set in resonance by interrogating light (114) having an electric field, E, perpendicular to wavevector K of the plasmonic nanostructure, i.e. $E \perp K$.

As shown in Figure 1A, molecular, biomolecular or atomic functionalizers (112) are anchored on the plasmonic nanostructure (100), so the plasmonic nanostructure becomes a 'functionalized plasmonic nanostructure', herein referred to as 'plasmonic nanostructure' (100). Said functionalizers (112) are capable of trapping the exogenous chemical or biological agents (113) to be detected. Trapping or interaction of the chemical and/or biological agent alters the properties of the local chemical and/or physical environment and results in alteration of the plasmon resonance conditions of the plasmonic nanostructure (100). When the plasmonic nanostructure (100) is optically interrogated by light (114) having properties capable of enforcing plasmonic resonance in the nanostructure (100), plasmonic resonance is enforced and radiation is emitted by the non-radiative plasmon resonance modes. The radiation emitted by the plasmonic nanostructure alters the properties of the light observed after the interaction with the nanostructure, i.e. it enhances the intensity and/or modifies the phase and/or the polarization of the produced light. Therefore, the properties of light resulting under on-resonance conditions differ with respect to the properties of light resulting under off-resonance conditions. The observed difference of the said properties of light between the on-resonance and off-resonance conditions constitutes the measurable signal of detection and quantification of the chemical and or biological agent under test.

In said thin film (140), functionalizers (112) are anchored, such as for example aptamers, preferably DNA, or other biomolecules, or chemical substances, which specialize in the trapping of specific agents (113), such as for example toxins, or biomolecules or biomedical agents (microbes, viruses, etc.), which constitute the target agents for detection. For example, one suitable sequence of DNA or RNA traps toxin molecules (aflatoxin, dioxin, etc.), or antibodies react with antigens, or another functionalizer (112) or the agents produce other selective chemical or physical or biological interactions. For each type of toxin or other chemical, biochemical, or biological agent, a functionalizer is provided which selectively traps the target agent under test, thus implementing selectivity of detection. In an exemplary case of using aptamers, the said molecular trapping creates an alteration of conformation of the aptamer or other functionalizers (112), with consequent alteration of the environment of the sensorial structure and the respective alteration of the plasmonic resonance, which is detected by optical interrogation.

An integrated embodiment of the plasmonic radiation biosensor is the device exemplarily presented in Figure 1B. For the implementation of the method disclosed herein, the device incorporates a nanostructured plasmonic sensor head (101) which is enclosed in an optofluidic vessel (111), i.e. a vessel having one or more sides transparent to the radiation used to allow light transmission. The sensor head (101) is immersed in the fluid under test (102), said fluid possibly containing a chemical or biological target agent to be detected. By these means, said agents are brought into physical contact with the plasmonic nanostructure (100) and interact to facilitate sensing.

Preferably, the detection device is integrated with an electronically controlled system of pumps and an optofluidic system, and a set of fluid supply tanks and drain tanks for the transport and drainage of the fluid under testing, in a manner that results in physical contact of the fluid substances under test and the nanostructure. Exemplarily in the embodiment of Figure 1B, the biosensor device further comprises a pumping system (106) that transports the fluids under test (102) in circulation to an optofluidic vessel (111), in a manner that results in physical contact of the fluids under test and the plasmonic nanostructure (100). Preferably, said pumping system is electronically controlled and comprises a set of fluid supply tanks (107), inert fluid (buffer) tanks (108) and disposal / drainage tank (109).

Operationally, the fluid under test is transported to the vessel (111) and circulates. Optical interrogation is performed by light (114) provided by light source (103). The change of the property of light, for example the intensity of light (114), is measured by use of photodetectors (104) and the signal is recorded in electronic unit (105). Subsequently, the head is cleaned with washing by using buffer fluid flown from tank (108). The washing regenerates the sensorial structures and restores the system to its initial condition (initialization). Not restoring to the initial state would necessitate the replacement of the sensorial structure. The data may be processed in unit (105) and is output to an electronic device (110), such as a computer or a recording or a display instrument, so as to be made available to the user. The user may be a human user or a machine.

The plasmonic nanostructure (100) is interrogated by optical monochromatic radiation, preferable produced by a laser source (103) at wavelength, $\lambda$, in the spectral region of visible or infrared, so as to achieve plasmon resonance. Figure 2 presents exemplary methods of interrogation. For the optimization of the sensitivity, the wavelength and the polarization of light, as well as the angle of incidence of light, $\theta$, (118) are suitably selected for achieving maximization of the transmitted signal (115), or the reflected signal (119) recorded in the photodetectors (104) under on-resonance conditions. This is compared with measurement obtained using a different light polarization, which does not enforce plasmon resonance in the structure, i.e. under off-resonance conditions. The differential measurement constitutes the detection signal and quantitative measurement provided by the sensor.

In one embodiment, the use of monochromatic radiation (114) composed of radiation of two or more wavelengths provides direct differential measurements. In said embodiment, in addition to the transmitted beam (115) there are recorded simultaneously the retroreflected (119) and the radiation scattered upon transmission (116) as well the radiation scattered upon reflection (117), which are also functions of the environment and the resonance conditions (Figure 2B). The total data of these measurements increases the reliability, the accuracy and the functionality of the sensor in general.

In reference to the said plasmonic system of Figure 2B, the plasmonic nanostructure (100) also assumes the role of a diffractive element. Further to the transmitted (115) and reflected (119) beams, the interrogating radiation (114) is diffracted to provide the transmitted (116) and reflected (117) scattered beams. Diffraction light may be composed of several diffraction orders, both in transmission (116) and reflection (117) according to the nanostructure design, the materials composing it, and the experimental conditions. The diffraction efficiency, '$\eta$', of the diffractive plasmonic nanostructure is defined as the ratio of the diffracted radiation intensity (116, 117)) in a specific order-of-diffraction to the incident radiation intensity (114). The diffraction efficiency, $\eta$, is a function of the modulation, $\Delta n_{c/eff}$, (I) of the effective complex refractive index, $n_{c/eff}$, of the plasmonic nanostructure (100)

$$\Delta n_{c/eff} = \Delta n_{eff} + i\Delta\kappa_{eff} \quad (I)$$

where '$n_{eff}$' is the effective refractive index and '$\kappa_{eff}$' is the effective attenuation coefficient at the wavelength $\lambda$ of the interrogating beam of light (114). Exposure to the chemical or biological agent (113) under test and its entrapment by the molecular functionalizer (112), differentiate the local environment of the plasmonic grating, alters the complex refractive index by $\Delta n_{c/eff}$ and respectively the diffraction efficiency $\eta$, of the orders of diffraction, by the effect of plasmon resonance. Simultaneous measurement of signals produced upon interrogation enhances the operational characteristics of the sensor.

In an exemplary implementation, detection of the intensity of optical radiation which is transmitted, reflected or scattered off the nanostructure is achieved by use of a single photodetector (104) or by a system of photodetectors (104), optical imagers (cameras), and the like optical and electrooptical analyzers of the properties of radiation. In the illustrative embodiment of Figure 2B, detection consists of measurement of radiation properties such as intensity by a plurality of photodetectors (104). In a preferred embodiment, the detection of the on-resonance enhanced intensity transmission, reflection and scattering of radiation due to plasmonic resonance is compared with the signal off-resonance, by choosing the wavelength, the optical radiation polarization and the interrogation geometry. The differential measurement constitutes direct detection of signal and quantitative measurement of the chemical or biological agent provided by the sensor.

The present methodology of signal detection of the sensor provides advantageous characteristics to the sensor and superiority of the key functional parameters: (a) the responsivity" of the sensor, defined as the ratio of the value of the measurand to the variation of the "cause", i.e. the molecular concentration of the chemical/biological agent or of an agent that is a function of the "cause", (b) the "sensitivity" or "detectivity" which relates to the signal-to-noise ratio (SNR) and determines the "lowest limit of detection" (LOD) and the detection "resolution limit" of the sensor (in practice this is a function of the whole detection system), (c) the "selectivity" of detection, i.e. the ability to distinguish among relevant chemical/biological agents. In addition, important characteristics are also the reliability and repeatability of sensing, the application environment, the isolation of noise sources, the sustainability, the potential of regeneration of the sensorial medium, the low capital cost of equipment and low operational costs, the user-friendliness, the structural strength and the like. Moreover, the present invention falls within the category of label-free biological and chemical sensors, representing a main trend of technology, which obviates the use of time-consuming and complex procedures of molecular labeling.

The invention embodies further innovative implementations which differentiate it from the state of art. For example, the plasmonic nanostructure of the sensor is fabricated in the form of surface relief on free-form surfaces or/and complex stereometric morphology. The created plasmonic elements, in combination with control of the polarization of the interrogating light beam, produce direct measurements of high signal-to-noise ratios and outperform the usual spectrometric devices due to the use of simple data acquisition and signal processing electronics.

In one representative implementation presented in Figure 3A, the sensor head (301) comprises plasmonic nanostructures (300) incorporated onto the surface of a 3-D free form solid substrate (monolithic object) (350). In the representative case of Figure 3A, a mathematically continuous harmonic surface relief is provided and having its surface coated with noble or other metal (e.g. Ag, Au, Al, Cu, etc.) or other suitable conducting or semiconducting material to form a film, using physical or chemical deposition, impregnation, or diffusion, thereby forming a plasmonic nanostructure (300). Materials deposition may be followed by further surface processing, for example by use of laser radiation, plasma or other methods. On the plasmonic nanostructure surface, molecular functionalizers are anchored after suitable chemical preparation, preferably biomolecules (e.g. DNA, RNA), or other molecular or atomic functionalizers, which are specialized in trapping specific molecular or biological agents to which the detection targets, without excluding the like aforementioned physical, chemical or biological reactions. Molecular or biological agents can be anchored by dipping in a solution, or by injection, or by another deposition method. Trapping the agent alters the environment of the sensor, changes the plasmonic resonance and enables differential optical interrogation.

As shown in Figure 3A, provided that the materials and the surface morphology allow, the plasmonic nanostructure (300) is interrogated by elliptically polarized light having electric field E (314). Light is transmitted (115) or/and retroreflected (119) or diffracted (116, 117). Produced light is split into two components (360) and (361) by a polarizing beam splitter or by Brewster angle reflection or other valid method. Exemplarily, the component (360) of the field E (314) achieves plasmon resonance and enhanced transmission of light while the other component (361) does not achieve plasmon resonance. The detection signal is the difference between the light intensity detected by photodetectors (104) or other devices, or the change of another property of light, such as the ellipticity of polarization, or the variations of the relative phase, which are detected by interferometry or ellipsometry methods. These differential measurements constitute the signal of detection and quantitative measurement of the chemical and biological agent.

Alternatively, provided that the materials allow, a light beam (114) polarized at an angle 'φ' with respect to the grating wavevector K is used, followed by splitting of the light components and differential measurement, as previously described. The alternative embodiment of Figure 3A shows a linearly polarized beam (314) at angle 'φ' with respect to grating wavevector K used, so as to provide an electric field component (360) parallel to the wavevector K and another electric field component (361) perpendicular to wavevector K. Both beams are split and the respective intensities are detected differentially, as previously described, or alternatively via the polarization ellipticity, or the variations of the relative phase detected by interferometric or ellipsometric methods.

In another preferred embodiment presented in Figure 3B, the sensor head (301) comprises bespoke designed surface-relief diffractive/holographic and other free-form plasmonic nanostructures (300a, 300b, 300c, 300d, 300e). Examples shown are plasmonic nanostructures with square profile structures (300a), periodic free-form structures (300b), specially designed hierarchical forms (300c), or aperiodic diffractive structures (300d). Further embodiments include mathematically modelled structures artefacts, and bioarchitectonic models which are reproduced by natural forms. Each plasmonic nanostructure is formed by covering the surface of a suitable surface relief with a nanometric film of thickness, t, (typically 20nm<t<80nm) for example of noble metal or other metal (π.χ. Ag, Au, Al, Cu, κτλ) or other suitable metal, so as to form a plasmonic system. The plasmonic nanostructure (300) of the sensor is fabricated by methods of casting or etching/sculpturing surface relief structures on free stereometric form substrates (350), so as to constitute plasmonic diffractive elements. On the surface, molecular functionalizers are anchored after suitable chemical preparation, preferably biomolecules (e.g. DNA, RNA), which are specialized in trapping specific molecular or biological agents to which the detection targets. For example, DNA or RNA aptamers having special sequencing are used for trapping toxin molecules (e.g. aflatoxins, dioxins, etc.), or a system of antigen-antibody, detects specific biological agents. Trapping of an agent alters the environment of the sensor, changes the plasmonic resonance and it becomes detected by differential optical interrogation.

In yet another embodiment of the invention, the use of radiation at two or more wavelengths produces directly differential measurements of the exogenous chemical or biological agent. The total measured data increase reliability and accuracy of detection.

In a variation of the method, there is embodied a predesigned spatial distribution of nano-islands (300e) of noble metal or other suitable material. Typical dimensions of the nano-island are <10nm, so that additional conditions of localized plasmon resonance (LSPR) are satisfied. The effect of LSPR synergize to provide additional or combined independent detection signals which amplify the operational characteristics of the sensor.

In further embodiments of the invention, the device embodies a plurality of nanostructured elements and a plurality of monochromatic radiation of many and different wavelengths, and/or different light polarization states, so as to achieve the simultaneous detection of a plurality of biological or/and chemical agents with very high accuracy.

In another implementation shown in Figure 3C, the invention introduces the concept of twin nanostructures. In the exemplary case of simple periodic gratings shown in Figure 3C, the gratings have the same geometrical morphology and the same spatial period, A. They are fabricated to have perpendicular wavevectors, so as to form a 'twin structure' such as the pairs (300f, 300g) or (300h, 300i), etc. The grating wavevector K for each structure having magnitude, $|K|=2\pi/\Lambda$, has direction perpendicular to the periodic spatial modulations of the structure. For the simultaneous interrogation of the gratings, a light beam of wavelength suitable for achieving plasmon resonance is used. The electric field polarization vector is chosen to be parallel to one of the grating wavevectors as appropriate to achieve plasmonic resonance and enhanced transmission and/or reflection and/or scattering only in the said one member of the pair and not in the other member of the pair. Consequently, simultaneous measurement of the radiation intensity of both members of the twin structure is performed. The differential signal produced constitutes the signal of detection and quantitative measurement provided by the sensor.

For reliability and increase of detectivity, there are provided one or more pairs of gratings, which have mutually perpendicular wavevectors which are not functionalized with aptamers or other molecules, and consequently they provide reference measurements (reference/control signal).

In a relevant exemplary implementation of the invention, there is provided a series of twin structures on the same sensorial head (301), such as for example the grating pairs (300f, 300g), (300h, 300i), etc. (Figure 3C). Each pair is carrying one or more specific molecular functionalizers. By these means, the same sensorial head embodies a plurality of the said pairs having different functionalization and thus becomes capable of providing simultaneous measurement of a plurality of different chemical or biological agents. For example, the pair (300f, 300g) is activated with DNA aptamers to detect a type of aflatoxin, while the pair (300h, 300i) is activated with another type of DNA aptamers to detect one type of dioxin, simultaneously.

In other implementations of the invention shown in Figure 3D, there is provided a 3-D sensorial surface of large surface area and free stereometric form incorporating a plurality of plasmonic nanostructures multiplexed in the same spatial region. Such an implementation which is described demonstratively in specialized exemplary embodiments of the sensor head (301), which are fabricated on free stereometric form monolithic substrates (350) and include combinations of nanostructures, for example multiplexed nanostructures (300k) and (300m), enable simultaneous and multi-beam interrogation at various discrete wavelengths or/and various polarizations of light. According to the invention, holographic elements designed algorithmically in electronic computers and/or optical holograms provide the potential for multiple interrogation and integration of multiplexing and interconnection operations. Holographic elements designed algorithmically (300n) in computers (computer generated holograms / CGH) or holograms recorded optically and reconstructed on free-form structures, may incorporate a multiplexed plurality of functionalizers to achieve simultaneous multiple interrogation and detection of many agents.

In further implementations of the invention, there are embodied structures such as artefacts and bioarchitectonic elements, as well as hierarchical nanostructures having special functionalities. In cases of complex spatial distribution of wavevectors, the use of diffractive structures of mathematically orthogonal wavevector twins in space, is provided.

In a second embodiment of the invention, the sensor head embodies optical waveguide devices made of one or multiple films, which implement plasmonic detection functions and are interconnected with an optical fibre network, so as to operate in remote and critical environments, areas of low accessibility and high risk. In an illustrative device, one surface relief plasmonic structure is fabricated on substrate of capable dimensions and embodies molecular or other functionalizers. Figure 4 depicts a biosensor head according to this second embodiment, which is particularly suitable for the application in inaccessible environments. In the embodiment of Figure 4A, the sensor head (401) comprises an optical waveguide (420). Said optical waveguide (420) incorporates a plasmonic nanostructure (400), which implements plasmonic detection functions and is interconnected with an optical fibre network (422a, 422b, 422c, 422d), so as to operate in remote and critical environments, areas of low accessibility and high risk. The interrogating light is guided by the optical fibre (422a) in the waveguide. The reflected (124), transmitted (115) or scattered (116) light is guided by optical fibres (422b, 422c, 422d) and is detected in a differential manner by photodetectors (104), is then recorded (105) and is outputted (110) to the user. For the use of radiation of many wavelengths, a Wavelength Demultiplexer (421) is provided. In an illustrative embodiment, one surface relief plasmonic nanostructure is fabricated on a monolithic substrate of capable dimensions (ranging from a few $\mu m^2$ to tens $cm^2$) and integrates molecular or other functionalizers. Preferably, the fabrication of the surface-relief free-form plasmonic nanostructure is realized by use of artificial design models or natural bioarchitectonic models. The plasmonic surface is functionalized suitably to detect a specific chemical or biological agent. This implementation allows analyte measurements to be performed in inaccessible, hazardous and remote environments, areas of limited accessibility, high risk and the like categories, while also providing detection capabilities with high accuracy and maximum sensitivity.

The plasmonic nanostructure (400) of this alternative embodiment possesses the same characteristics as the plasmonic nanostructure (100) of the first embodiment, e.g., has a 3-D free stereometric form, with the same size/thickness characteristics and is composed of the same materials using the same manufacturing methods.

Figure 4B shows that the biosensor head (401), with optical waveguides (420) incorporating a plasmonic nanostructure (400), is interconnected with optical fibres (422a, 422b, 422d). The plasmonic structure (400) is activated suitably to detect selectively the particular chemical or biological agent. In an exemplary optical waveguide device, the relief plasmonic nanostructure (400) is fabricated on free-form monolithic substrate (450) and is connected to an optical fibre (422a) which inputs the optical interrogation radiation and which has the potential of maintaining the polarization of the electric field (polarization preserving optical fibre). The transmitted light interacts with the structure (400), is collected by the output optical fibre (422b), then directed to a polarizing beam splitter (125) and finally is detected differentially by photodetectors (104). In addition, measurement of light which is output due to diffraction (127), i.e. which is outcoupled of the waveguide via both interphases, can optionally also be performed directly by photodetectors as shown Figure 4C. The connection with optical fibres (422d) allows measurement of the reflected light (124) through distributed Bragg reflection, as well as the further interconnection with other sensors in an optical fibre network. In all cases, the measurement of the intensities is a function of the plasmonic resonance. Differential measurement of the light intensities of TE and TM propagation modes constitute the signal of detection and quantitative measurement provided by the sensor.

Thus, this embodiment makes use of the eigenstates of polarization of the guided light TE and TM. Light components in two perpendicular eigenpolarizations interact with the structure. The transverse electric, TE, (eigenstate TE) component has electric field parallel to the waveguide interphase, and the other component of transverse magnetic field, TM, (eigenstate TM) has electric field of light perpendicular and at an angle with respect to the waveguide interphase. Upon interaction, light is collected by an optical fibre (422b) and is led to a polarizing beam splitter. Measurement of the intensities of TE and TM waveguide modes provides the differential signal of detection. The intensity values are in all cases the function of the plasmon resonance and the enhanced radiation emission from the plasmonic nanostructure (400). The difference of values constitutes the detection of the sensor. In addition, there is provided measurement of the intensity of light outcoupled via the waveguide surface or the back surface (127) of the device due to diffraction. Connection of optical fibres allows measurements of reflected light and interconnection with other sensors in an optical fibre network for remote interrogation by applying time-of-flight techniques, so as to constitute sensor networks for inaccessible and toxic industrial environments and other environmental and biomedical applications in areas of limited accessibility.

Figure 5 shows alternative designs of the sensory head (401a, 401b) according to the second embodiment. In Figure 5A, the sensor head (401a) comprises a single optical waveguide (420), said waveguide comprising one or multiple plasmonic nanostructures (400).

In the alternative implementation shown in Figure 5B, the sensor head (401b) incorporates a plurality $\kappa=1,2...N$ optical waveguides (420) on the same monolithic substrate (450). A plurality $\kappa= 1,2,...N$ of waveguide plasmonic sensors are thus provided on the same monolithic substrate. The $\kappa$-sensor is fabricated with respective spatial frequency '$\Lambda\kappa$' and is designed to operate at light wavelength $\lambda\kappa$, $\kappa=1,2...N$ and a respective functionalizer (112), suitable for detecting the '$\kappa$' chemical or biological agent (113). Each sensor anchors a different functionalizer suitable for detecting a specific agent and it is designed so as to operate at different wavelength, $\lambda\kappa$ ($\kappa=1,2... N$). The plurality of wavelengths $\lambda1, \lambda2, ...\lambda N$ is input by an optical fibre (422a) and transmitted simultaneously by use of wavelength division multiplexing (WDM) in the optical fibre (422a). The coupling of light in the waveguides interrogates the plurality of sensors (420). As an example, light of $\lambda\kappa$ wavelength interacts with the '$\kappa$' plasmonic nanostructure and detects the agent which corresponds to '$\kappa$-sensor'. Preferably, the output light signals are guided with the optical fibre (422b), polarization device (125) and WDM demultiplexer (421), and end up to the photodetector system (104), and simultaneous data recording (105, 110) of the 'N' different chemical or biological agents.

The plasmonic structure (400) is designed and fabricated preferably on a large dimension monolithic substrate (450) having free-form, in order to provide a large interaction region. In Figure 5A and 5B, the waveguide (420) is constrained laterally in a way as the waveguided light, which is coupled in from the optical fibre (422a), on the one hand to be transmitted over a large interaction area, and on the other hand to be effectively collected by the output fibre optic (422b), to be split in the TE and TM polarizations by the polarization element (125) and detect the agent by differential measurement of the TE and TM intensities by the photodetectors (104).

In the second embodiment of the invention (Figures 4 and 5), the sensor head (401a, 401b) preferably comes in direct physical contact with the surrounding fluid having the agent under test (102) and interacts with the nanostructure (400). This arrangement obviates the need for a pumping system and simplifies the design of the biosensor device, thus making it suitable for analyte detection in inaccessible environments.

In another implementation of the invention, the sensor head comprises plasmonic diffractive nanostructures integrated in ultraporous free-form solid objects, such as aerogels, which constitute sensors of very small refractive index. According to another embodiment, the fabrication of high resolution plasmonic nanostructures $\Lambda<1\mu m$ on extended free-form surfaces is achieved with methods of reproducing artificial or natural specimens by application of minification. In particular, the technique of systolic nanotechnology [Papachristopoulou & Vainos, Nanomaterials 10, 2418 (2020)] is applied, in which a relief master model object which is fabricated in upltraporous aerogel monolithic substrate (650) is downsized to produce a 'clone' conformal to the master 'parent', having much smaller dimensions and different functionalities. With this systolic methodology there are fabricated clones having much smaller dimensions having nanometric structural resolution, without any constraints in design, size and morphology. In one example, a harmonic relief plasmonic diffraction grating of spatial period A, coated with a conducting or semiconducting thin film to form a plasmonic nanostructure (600a), is embodied in an aerogel monolithic substrate (650) so as to constitute a monolithic device (660a) (Figure 6A, left). The said device constitutes a plasmonic nanostructure sensor of ultraporous substrate (650) having very small refractive index.

In a relevant implementation, an exemplary plasmonic nanostructure (600a) comprising a harmonic surface relief structure of period A is transformed by systolic cloning to fabricate a clone plasmonic sensor device. Figure 6A shows such a device transformed by the method of systolic cloning to a dense functional object (660b) which carries a plasmonic nanostructure (600b) with a grating having spatial period $\Lambda/m$, where 'm' is the downsizing factor. The clone structure (660b) is conformal to the ultraporous parent (660a). After thin film coating and molecular functionalization (112), the plasmonic nanostructure (600b) with the harmonic grating of period A/m satisfies the requirements of plasmonic resonance for one predesigned optimal operational wavelength λ. The device acting for the specific molecular or other functionalizer, traps selectively the specific chemical or biological agent and detects the agent according to the method. The nanostructures can be unlimitedly formed on large surface area of planar or free form substrates. By the method of systolic cloning, the plasmonic nanostructure having free form is arbitrarily structured by design to embody complex nanostructures. The flexible adaptation in complex 3-D functional devices and solid substrates can thus yield integrated multifunctional sensor-actuator systems.

In a further embodiment of the invention, a system of artificial or bioarchitectonic nanotips is integrated by casting into a free-form solid substrate or on an optical fibre, preferably close to or in contact with the fibre core, so as to create an ultra-porous structure having for example a star profile or a related geometry around the fibre core and interact with the waveguided light and the external environment. The structure is coated with a noble metal and functions as a plasmonic sensor according to the present invention. Furthermore, the systolic cloning of the structure produces a new nanostructured solid body and device having a stereometric profile which is conformal to the ultraporous structure and different properties and constitutes a new different sensor structure. In a similar manner, representative free-form nanostructures are incorporated in optical fibres and constitute sensor devices for special applications. As shown in Figure 6B, a plasmonic nanostructure (600c) containing a system of nanotip reliefs is incorporated by casting on an optical fibre (422), preferably close or in contact with the fibre core, so as to form an ultraporous microstructure object (660c) with a particular profile around the fibre core and to interact with the transmitted light. Said object (660c) is coated with a noble metal film and operates as a plasmonic sensor according to the present invention. In addition, the systolic cloning of the said structure produces a new nanostructured object (660d) having suitable profile, which has a plasmonic nanostructure (600d) with a relief conformal to the parent, and has different sensorial properties due to its smaller dimensions. In a similar approach, exemplary free-form relief nanostructures (600e, 600f) are embodied on optical fibres (422) and constitute sensor devices (660e, 660f). The above said waveguide systems can be interconnected directly to a fibre optic (422) network so as to form sensors operating remotely as interconnected sensor networks. Such sensors can be used, for example, in environments of limited accessibility, toxic industrial environments, and other environmental and biomedical applications of limited accessibility.

In the example of Figure 6C, plasmonic diffractive nanostructures (600g) are incorporated in ultraporous free-form substrates (650), so as to constitute sensors having very small refractive index. By using the method of systolic cloning, a conformal dense solid object (660h) is fabricated which also embodies conformal dense solid nanostructures (600h), which implement different functionalities.

Thus, according to the invention, there is provided an integrated sensor device of chemical and biological agents which are collected and transferred in fluid (gas or liquid) medium which includes:

- a sensor head (101, 301, 401, 401a, 401b) which comprises one or more functionalized plasmonic nanostructures (100, 300a to 300n, 400, 600a to 600h), arranged so as to achieve detection of chemical and biological agents,

- a light source with optical system (103) or optical waveguide (120) that guides the optical radiation, preferably provided by a laser source in the spectral range of ultraviolet or visible or infrared, at wavelength λ, so as to interrogate the sensor achieving plasmon resonance for the particular plasmonic structure and provide detection of the variation of the property of light, for example the intensity of light,

- one or more photodetectors (104), optionally in combination with other optical elements such as interferometric or/and polarization devices, for the measurement of the intensity of light,

- a suitable electronic system (105), which includes a control system and acquisition, processing, storage and output of the data (110).

In a preferred embodiment, the present invention provides an integrated biosensor device for chemical and biological agents which comprises:

- a sensor head (101, 301) of capable surface area, typically ranging form a few $\mu m^2$ to several tens of $cm^2$ and special free-form design, composed of a single or multiple functionalized plasmonic nanostructures (100, 300a to 300n, 400, 600a to 600h) having a variety of functions to secure detection,

- a light source (103) with a free-space optical system or an optical waveguide (120) which transmit the optical radiation, preferably produced by a laser source, preferably emitting in the spectral regions of ultraviolet, visible or infrared, at a wavelength λ, suitable for achieving plasmon resonance, with which radiation the plasmonic sensorial nanostructure is interrogated so as to achieve plasmon resonance

- one or more photodetectors (104), imaging camera or the like devices, arranged to detect the transmitted, or reflected or diffracted radiation, thereby allowing the measurement of one or more properties of light, which in the simplest representative case is the intensity of the optical radiation,

- optionally an optofluidic vessel (111) in which the fluid (102) containing the agents (113) under test flows in a manner that results in physical contact of the substances under test and the plasmonic nanostructure (100), optionally with the aid of hydraulic pumps and tanks, and

- a suitable electronic system (105, 110), which comprises control system and data acquisition, data processing and data storage, calibration and estimation of the concentration of every substance by simple computational techniques, or/and using machine learning and artificial intelligence.

In conclusion, the invention in parallel to providing mitigation of the drawbacks of the prior art, demonstrates the following advantages:

(a) The disclosed method and device for direct detection of chemical and biological agents, obviating the need to use spectroscopic devices, is characterized by the simultaneous differential interrogation of functionalized plasmonic nanostructures by light. The simple construction and signal processing offer rapid sensing results.

(b) The integration and use of surfaces of free stereometric form to achieve plasmonic interactions among exogenous agents and radiation allow the coherent interrogation of wide surface areas (or 3-D volumes). This characteristic is achieved exclusively due to the disclosed methods for the fabrication of the device and has as a result the increased responsivity, selectivity and high sensitivity of the sensor.

(c) Flexibility of construction of the plasmonic head of the sensor via methods of nanocasting and systolic cloning of master ultraporous models of the aforementioned structures embodied in flat or free-form surfaces, which results in high detectivity and selectivity of the exogenous agents and flexible adaptation to complex functional devices.

(d) Capability of constructing a variety of simple integrated prototype instruments of relative small size and low cost, without the need for spectroscopic instrumentation.

(e) Implementation of a simple operational low-cost system which incorporates fluidic system, laser-based optical interrogation, electronic processing and signal retrieval.

(f) Flexible adaptation and integration of the sensors having predesigned free-form into functional devices, structural bodies and machines.

The plasmonic radiation biosensor finds applications in the detection and monitoring of biological and chemical agents in liquid and gas environments, offering flexibility, adaptability and low cost in a series of exemplary and not exclusive applications which concern:

(a) testing of foods for sensing hazardous toxins and biological elements offering direct and user-friendly detection at the production field of agricultural and vinicultural products, the food processing and related raw materials industries, as well as the transport, storage and consumption of foods,

(b) the on-site sensing of toxic agents in the environment, and the early warning of environmental hazards for the safety of the citizen, providing selective detection of traces of toxic substances, such as chemical pollution, explosives, and the like dangerous factors,

(c) the biomedical diagnosis for the direct point-of-care examination and the monitoring of diseases, detection of contaminating factors, etc.,

(d) the remote detection of toxic agents in environments of limited accessibility and high risk, chemical, biological and radiological hazards by using flexible optical waveguide sensor heads,

(e) the flexible innovative incorporation of the sensorial free-form head in a conformal mode to solid objects, devices and machines, so as to produce an integral multifunctional system of sensing and actuation.

EXAMPLES

Hereinafter, the present invention is described in more detail with reference to examples. It will be apparent to one of ordinary skill in the art that these examples are for illustrative purposes only and should not be construed as limiting or altering the scope of the invention.

EXAMPLE 1

Fabrication of nanostructures by systolic cloning of ultraporous solid model master objects

Figure 7 describes a representative experimental results of systolic cloning technology by use of ultraporous silica aerogel model objects. In Figure 7A the scanning electron microscope images of the master models are shown and in Figure 7B the scanning electron microscope images of the respective clones are presented. The first example is the ultraporous object (760a) embodying a surface relief grating structure (730a). This master model object (760a) is thermally processed and fused to produce the dense solid fused silica object which is the conformal clone (760b) of the master model having smaller features. In the example shown, the periodic surface relief structure (730a) is reduced by a factor of about 3, resulting in a dense silica periodic surface relief structure (730b). The second exemplar master model is a bioarchitectonic object (760c) embodying microtips (730c) replicating scarabaei wing structures. The systolic cloning results in dense fused silica object (760d) comprising size-reduced nanotip relief structures (730d). In Figure 7C, the respective optical functions are presented, showing the near field optical operation of the periodic nanostructure (left) and the nanotip array (right), demonstrating the capability of plasmonic interactions.

EXAMPLE 2

Experimental records of sensing the toxin PCB77 at parts-per-quadrillion concentrations.

Figure 8 presents experimental data concerning sensing of the hazardous toxin PCB77 in liquids by use of the integrated prototype system schematically illustrated in Figure 1B. Figure 8A presents the real time signal recorded in a computer display. The recording shows the signals 'high' and 'low' states recorded corresponding to circles of exposure to the toxic fluid and washing by use a buffer fluid. In Figure 8B, a table of post processing of the real time recording is presented to illustrate the analysis of signals. In Figure 8C, the testing results are presented showing the calibrated response of the integrated prototype sensor (Figure 1B). The prototype device clearly demonstrates the capability to detect very low toxic concentrations of the order of parts-per-quadrillion.

**Claims**

1. Method of detecting chemical and biological agents comprising the following steps:

(a) an exogenous chemical or/and biological agent (113) is trapped in a plasmonic nanostructure (100, 300a to 300n, 400, 600a to 600h) and alters its physical or/and chemical environment, (b) upon optical interrogation with light (114) the nanostructure (100, 300a to 300n, 400, 600a to 600h) is forced to plasmonic resonance and emits radiation by its non-radiative plasmon resonance modes, wherein said emitted radiation alters the properties of the transmitted (115), reflected (124), retro-reflected (119), and/or scattered (diffracted) light (116, 117, 127), and (c) the altered properties of the light (115, 116, 117, 119, 124, 127) produced under on-resonance conditions are compared with the respective properties of the radiation produced under off-resonance conditions and the difference produced constitutes the signal for the detection and quantitative measurement of the exogenous agent (113).

2. The method according to claim 1, **characterized in that**, upon optical interrogation, the signal and the measurable physical quantity consists of the differential variation of the difference of the properties of radiation between the conditions on-resonance and the conditions off-resonance, i.e. the intensity or/and the phase or/and the polarization of the radiation which is transmitted (115) or/and reflected (119) or/and scattered/diffracted (116, 117) off the nanostructure and detected by suitable photodetectors (104), or/and cameras and the like optoelectronic analyzers assisted by means of suitable optical imaging, or/and interferometric, or/and polarization devices (125).

3. The method according to claim 1 or 2, wherein the nanostructure (100, 300a to 300n, 400, 600a to 600h) is interrogated by radiation at one or more wavelengths and consisting of at least two components (360, 361) of radiation polarization (314), or/and the composition of the said components of radiation polarization, so as the mutual differences of transmissivity (115), or/and reflectivity (119) or/and diffractivity, i.e. the diffraction (116, 117) efficiency, for the polarization components (360, 361) at the said wavelengths, constitute the signal for the detection and quantitative measurement of the exogenous chemical or biological agent (113).

4. Plasmon radiation biosensor device for the application of the method for detecting chemical and biological agents according to anyone of claims 1 to 3, which comprises:

a sensor head (101, 301, 401, 401a, 401b), said sensor head (101, 301, 401, 401a, 401b) comprising one or more three-dimensional (3-D) conducting or semiconducting nanostructures (100, 300a to 300n, 400, 600a to 600h) of free stereometric form, i.e. without design constraints, made of inorganic, or/and organic, or/and hybrid, or/and ultraporous materials, or a conformal dense solid clone (600b, 600d, 600h) of a nanostructure (600a,, 600c, 600g); said one or more nanostructures (100, 300a to 300n, 400, 600a to 600h) comprising molecular or atomic functionalizers (112) arranged to trap the tested chemical or biological agents (113), such that, upon optical interrogation by light (114), the nanostructure is forced to plasmonic resonance and emits radiation by non-radiative plasmon resonance modes, wherein said emitted radiation alters the properties of the transmitted (115), reflected (124), retro-reflected (119), and/or scattered (diffracted) light (116, 117, 127);

and wherein the altered properties of the light (115, 116, 117, 119, 124, 127) produced under on-resonance conditions differ from the respective properties of the radiation provided under off-resonance conditions, and the differential variation of these properties constitutes the signal for the detection and quantitative measurement of the exogenous chemical or biological agent (113).

5. The biosensor device according to claim 4, wherein the geometry of the plasmonic nanostructure (100, 300a to 300n, 400, 600a to 600h), as well as the properties of the optical interrogation light (114), in particular the wavelength and the polarization of light, are selected so as to maximize the signal for the detection and quantitative measurement of the exogenous chemical or biological agent (113).

6. The biosensor device according to claim 4 or 5, wherein the sensor head (301) is a solid object of free stereometric form, which comprises two or more free-form plasmonic diffractive nanostructures (300), **characterized in that** they consist of at least one pair of plasmonic diffractive nanostructures (300f, 300g), wherein the members of the at least one pair have mutually orthogonal local grating wavevectors, arranged such that, upon optical interrogation by light (114) comprising one or more wavelengths, they provide direct detection of the alteration of the efficiency of transmission (115), or/and reflection or retroreflection (119), or/and diffraction (116, 117), by the differential measurement of the light intensities corresponding to nanostructures (300f) and (300g) using suitable photodetectors (104), cameras and the like optoelectronic analyzers or/-and suitable optical imagers, or/and interferometric or/and polarization devices (125).

7. The biosensor device according to anyone of claims 4 to 6, wherein the sensor head (301) comprises single elements of multiplexed plasmonic nanostructures (300k, 300m) of plasmonic nanostructures or/-and an ensemble of multiplexed functionalized plasmonic diffractive nanostructures (300k, 300m), or/-and holographic structures (300n), wherein each nanostructure comprises a particular species of molecular or atomic functionalizer (112), so as to provide selective and simultaneous detection and measurement of the respective chemical or biological agents (113).

8. The biosensor device according to anyone of claims 4 to 7, wherein the sensor head (301) comprises a plurality of nano-islands of plasmonic nanostructures (300e) made of conducting or semiconducting materials, arranged such that, upon optical interrogation, said nanostructures (300e) modify the diffraction efficiency due to non-radiative plasmonic resonance and optionally of additional localized plasmon resonance effects, the variation of which constitute the signal for the detection and quantitative measurement of the exogenous chemical or biological agents (113).

9. The biosensor device according to anyone of claims 4 to 8, wherein the sensor head (301) further comprises one or more non-functionalized plasmonic diffractive nanostructures (300h, 300i), arranged such that, upon optical interrogation and differential measurement, they provide one or more reference measurements to the sensor for the calibration and quantitation of the signal.

10. The biosensor device according to claim 4, which comprises a plasmonic biosensor head (401) of free stereometric form, comprising at least one optical waveguide (420), and one or more functionalized plasmonic nanostructures (400) on the waveguide interphase and having spatial geometric modulation so as to guide the light to interact with the chemical or biological agents (113), by employing the excited TE and TM waveguide modes at one or more wavelengths of light, by measuring the reflected (124, 422d), the transmitted (422b) and scattered light (127, 422c), separated to the corresponding polarization components by polarizing beam splitters, using photodetectors (104), to provide signals for the detection and quantitative measurement of the exogenous chemical or biological agents (113).

11. The biosensor device according to claim 10, comprising a free stereometric form sensor head (401b), which comprises a plurality of 'N' optical waveguides (420), arranged such that, when the one or more functionalized surface plasmonic nanostructures (400) are optically interrogated by light composed of an ensemble of discrete wavelengths ($\lambda 1$, $\lambda 2$ ,,, $\lambda N$) via N-channel multiplexing, so as to achieve simultaneous detection of the corresponding 'N' different chemical and biological agents (113) is achieved.

12. Plasmon radiation biosensor device for the detection of chemical and biological agents according to anyone of claims 4 to 11, which comprises:

- a sensor head (101, 301, 401, 401a, 401b) comprising one or more free-form plasmonic diffractive nanostructures (100, 300a to 300n, 400, 600a to 600h) which are molecularly or atomically functionalized, so as to selectively trap exogenous chemical or biological agents (113),

- optionally, an optofluidic vessel (111) arranged such that the fluid (102) containing the agents (113) under test comes into physical contact with the one or more plasmonic nanostructures (100, 300a to 300n, 400, 600a to 600h),

- optionally, a pumping system and a fluidic system (106) with tanks for fluid supply (107, 108) and disposal (109), arranged for the transport of the fluid which contains the chemical or biological agents and the like substances, so as to provide physical contact and interaction of said agents and the nanostructure,

- a light source with optical system (103) or optical waveguide (120), arranged for the optical interrogation of the one or more nanostructures 100, 300a to 300n, 400, 600a to 600h) under conditions of non-radiative plasmon resonance and outside the conditions of plasmon resonance at one or more discrete wavelengths of light,

- one or more photodetectors (104) or similar optical and electrooptical analyzers of the properties of radiation, optionally in combination with other optical elements such as interferometric or/and polarization devices, so as to achieve signal detection, and

- an electronic control system (105, 110), arranged for the acquisition, recording, storage, processing, transmission and display of data.

**FIG. 1**

**FIG. 2**

**FIG. 3**

**FIG. 4**

FIG. 5

A

650

600a

660a

∧

650

600b

∧/m

660b

B

600c

422

660c

600d

660d

422

422

660e

600e

422

660f

600f

C

660g

650

600g

660h

600h

**FIG. 6**

**FIG. 7**

**A**

**B**

Time (sec)

**C**

PCB77 concentration (pgr/Lt)

**FIG. 8**

| | Europäisches Patentamt European Patent Office Office européen des brevets | EUROPEAN SEARCH REPORT | Application Number EP 25 18 0914 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/31478 A2 (QUANTECH LTD [US]; WITTY THOMAS R [US] ET AL.) 18 April 2002 (2002-04-18) * the whole document * | 1-12 | INV. G01N21/552 G01N21/77 |
| X | US 2012/208174 A1 (GALUSH WILLIAM J [US] ET AL) 16 August 2012 (2012-08-16) * paragraphs [0035] - [0042], [0090] - [0097]; figure 1 * | 1,2,4-12 | |
| X | US 2015/247846 A1 (GERION DANIELE [US] ET AL) 3 September 2015 (2015-09-03) * paragraphs [0036] - [0066]; figures 1-4 * | 1-12 | |
| A | EP 2 060 904 A1 (KONINKL PHILIPS ELECTRONICS NV [NL]) 20 May 2009 (2009-05-20) * paragraphs [0032] - [0047]; figures 1, 2 * | 1-12 | |
| A | US 2004/155309 A1 (SORIN TAKAAKI [JP] ET AL) 12 August 2004 (2004-08-12) * paragraphs [0197] - [0284]; figures 1-13 * | 1-12 | TECHNICAL FIELDS SEARCHED (IPC) G01N |
| A | US 2008/144027 A1 (HOMOLA JIRI [CZ] ET AL) 19 June 2008 (2008-06-19) * paragraph [0018]; figure 4 * | 1-12 | |

-/--

The present search report has been drawn up for all claims

| Place of search | Date of completion of the search | Examiner |
|---|---|---|
| Munich | 17 October 2025 | Flentje, Farida |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ........................................................................................

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

Application Number

EP 25 18 0914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VAINOS NIKOLAOS A. ET AL: "Nanolayer Growth on 3-Dimensional Micro-Objects by Pulsed Laser Deposition", NANOMATERIALS , vol. 11, no. 1 25 December 2020 (2020-12-25), page 35, XP093240533, ISSN: 2079-4991, DOI: 10.3390/nano11010035 Retrieved from the Internet: URL:https://www.mdpi.com/2079-4991/11/1/35/pdf * the whole document * ----- | 1-12 | |

TECHNICAL FIELDS
SEARCHED (IPC)

The present search report has been drawn up for all claims

| Place of search | Date of completion of the search | Examiner |
|---|---|---|
| Munich | 17 October 2025 | Flentje, Farida |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 25 18 0914

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2025

| Patent document cited in search report | | | Publication date | Patent family member(s) | | | Publication date |
|---|---|---|---|---|---|---|---|
| WO | 0231478 | A2 | 18-04-2002 | AU | 8906601 | A | 22-04-2002 |
| | | | | WO | 0231478 | A2 | 18-04-2002 |
| US | 2012208174 | A1 | 16-08-2012 | US | 2012208174 | A1 | 16-08-2012 |
| | | | | WO | 2010091293 | A1 | 12-08-2010 |
| US | 2015247846 | A1 | 03-09-2015 | CA | 2976633 | A1 | 03-09-2015 |
| | | | | CN | 106233140 | A | 14-12-2016 |
| | | | | EP | 3111214 | A1 | 04-01-2017 |
| | | | | KR | 20160138059 | A | 02-12-2016 |
| | | | | TW | 201538959 | A | 16-10-2015 |
| | | | | US | 2015247846 | A1 | 03-09-2015 |
| | | | | US | 2019017105 | A1 | 17-01-2019 |
| | | | | US | 2021181105 | A1 | 17-06-2021 |
| | | | | WO | 2015130980 | A1 | 03-09-2015 |
| EP | 2060904 | A1 | 20-05-2009 | EP | 2060904 | A1 | 20-05-2009 |
| | | | | WO | 2009063368 | A2 | 22-05-2009 |
| US | 2004155309 | A1 | 12-08-2004 | EP | 1424549 | A1 | 02-06-2004 |
| | | | | US | 2004155309 | A1 | 12-08-2004 |
| | | | | WO | 03014711 | A1 | 20-02-2003 |
| US | 2008144027 | A1 | 19-06-2008 | CA | 2598118 | A1 | 02-08-2007 |
| | | | | CN | 101175989 | A | 07-05-2008 |
| | | | | CZ | 299489 | B6 | 13-08-2008 |
| | | | | EP | 1844319 | A2 | 17-10-2007 |
| | | | | JP | 4999707 | B2 | 15-08-2012 |
| | | | | JP | 2008527395 | A | 24-07-2008 |
| | | | | US | 2008144027 | A1 | 19-06-2008 |
| | | | | WO | 2007085913 | A2 | 02-08-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11467154 B2
- US 20190250100 A1
- US 11237112 B2
- US 20060011862 A1
- US 20160122794 A1
- US 20200386681 A1
- US 20130065777 A

### Non-patent literature cited in the description

- **AMENDOLA et al.** *J. Phys.: Condens. Matter*, 2017, vol. 29, 203002
- **OTTO**. *Zeitschrift fuer Physik*, 1968, vol. 216, 398-410
- **KRETSCHMANN, Z.** *Naturforsch*, 1968, vol. 23 a, 2135-2136
- **LIEDBERG et al.** *Sensors and Actuators*, 1983, vol. 4, 299
- **SINGH** ; **HILLIER**. *Anal. Chem.*, 2006, vol. 78, 2009
- **LI et al.** *ACS Sensors*, 2020, vol. 5, 1419
- **WANG** ; **ZHOU**. *Anal. Chem.*, 2008, vol. 80, 7174
- **DING et al.** *Bioorg. & Med Chem Lett.*, 2017, vol. 27, 4256
- **CHANG**. *Biosensors*, 2021, vol. 11, 233
- **SUN**. *J Lab Autom*, 2015, vol. 334
- **BOYD, HEEBNER**. *Appl Opt*, 2001, vol. 40, 5742
- **COELHO et al.** *J. Biomed Opt*, 2016, vol. 21, 087005
- **MELINTE et al.** *Trends Anal Chem*, 2022, vol. 154, 116679
- **DAI et al.** *Comp Rev Food Sci Food Saf.*, 2022, 1-21
- **SHALAEV** ; **KAWATA**. Nanophotonics with surface plasmons. Elsevier, 2007
- **EBBESEN et al.** *Nature*, 1998, vol. 39, 668
- **SINGH** ; **HILLIER**. *Anal. Chem.*, 2008, vol. 80, 3803
- **FERRELL**. *Phys. Rev.*, 1958, vol. 111, 1214
- **STERN**. *Phys. Rev. Letters*, 1962, vol. 8, 7
- **STEINMANN**. *Phys. Rev. Lett.*, 1960, vol. 5, 470
- **TENG** ; **STERN**. *Phys. Rev. Lett*, 1967, vol. 19, 511
- **KRETSCHMANN**. *Z. Naturforsch.*, 1968, vol. 23 a, 2135-2136
- **RAETHER**. Surface Plasmons on Smooth and Rough Surfaces and on Gratings. Springer-Verlag, 1988
- **PAPACHRISTOPOULOU** ; **VAINOS**. *Nanomaterials*, 2020, vol. 10, 2418